# EUROPEAN PATENT APPLICATION

(11) **EP 4 745 921 A1**
(43) Date of publication of application: **20.05.2026**
(21) Application number: 25216059.3
(22) Date of filing: 14.11.2025
(51) Int. Cl.: G07C 5/00, G07C 5/08, B60R 21/0132

(54) **METHODS AND SYSTEMS OF DETECTING CRASH EVENTS FROM LIVE SENSOR DATA**

(30) Priority: 15.11.2024 US 202463721049 P
(71) Applicant: Cambridge Mobile Telematics Inc., Cambridge, MA 02142 (US)
(72) Inventor: COLLINS, John, Cambridge, 02142 (US)
(74) Representative: Mewburn Ellis LLP

(57) **Abstract**

Methods and systems for detecting vehicle crash events using real-time sensor data are disclosed. In some embodiments, an application executing on a computing device disposed in a vehicle receives a stream of time-series data from one or more motion sensors during a drive. For each contiguous interval of a first predefined length, the application generates a crash prediction indicative of whether a crash occurred during that interval. Generating the crash prediction includes executing a crash detection neural network on sensor data collected over a time period that comprises the interval and has a second, greater predefined length. For each crash prediction, the application determines whether the prediction meets one or more predefined threshold criteria. In response to meeting the criteria, the application generates a crash analysis using the corresponding sensor data.

## Description

### CROSS-REFERENCES TO RELATED APPLICATIONS

This application claims priority to U.S. Provisional Patent Application No. 63/721,049, filed on November 15, 2024, entitled "Methods and Systems of Detecting Crash Events from Live Sensor Data," the disclosure of which is hereby incorporated by reference in its entirety for all purposes

### BACKGROUND OF THE INVENTION

Mobile devices offer an ever improving suite of sensors whose data can be used to evaluate the surrounding environment and the mobile device's relationship thereto. These capabilities offer many possibilities for detecting when the device is in a vehicle, as well as the movements of the vehicle. As a result, insights into the unsafe driving tendencies of the person operating the vehicle may be obtained. However, despite the progress made in the area of using mobile device sensors to detect potentially risky driving maneuvers, there is a need in the art for improved methods and systems for accurately and efficiently evaluating the risk associated with such maneuvers in relation to the local environment.

### SUMMARY

In some embodiments, a computer-implemented method of detecting a crash event is provided. The method includes receiving, in real-time by an application executing on a computing device disposed in a vehicle during a drive, a stream of time-series data generated by one or more motion sensors disposed in the vehicle during the drive. The method further includes generating, by the application for each contiguous interval within the stream of time-series data of a first predefined length, a crash prediction. In some embodiments, the crash prediction for a contiguous interval is indicative of whether the vehicle was involved in a crash during the contiguous interval. In some embodiments, generating the crash prediction for the contiguous interval includes executing, by the application, a crash detection neural network on the time-series data generated by the one or more motion sensors during a time period that comprises the contiguous interval in response to receiving the time-series data generated during the time period. In some embodiments, the time period has a second predefined length that is greater than the first predefined length. The method further includes, for each crash prediction, determining, by the application, whether the crash prediction meets one or more predefined crash detection threshold criteria. The method further includes generating, by the application, a crash analysis using the time-series data generated during the corresponding time period in response to determining that the crash prediction meets the one or more predefined crash detection threshold criteria.

In some embodiments, the computing device comprises the one or more motion sensors. In some embodiments, the one or more motion sensors comprise an accelerometer and the time-series data comprises accelerometer measurements generated by the accelerometer. In some embodiments, the one or more motion sensors comprise a Global Navigation Satellite System (GNSS) receiver and the time-series data comprises speed measurements generated by the GNSS receiver. In some embodiments, the time-series data comprises accelerometer measurements generated at a first sampling rate and speed measurements generated at a second sampling rate that is less than the first sampling rate, and the method further includes generating, for each contiguous interval, interpolated speed measurements at the first sampling rate.

In some embodiments, the first predefined length is greater than an interval between successive measurements of the time-series data. In some embodiments, the first predefined length of each contiguous interval is one second. In some embodiments, the start time of the time period is the same as the start time of the contiguous interval. In some embodiments, the start time of the time period is prior to the start time of the contiguous interval.

In some embodiments, the method further includes receiving a collection of time-series data generated by one or more motion sensors disposed in a second vehicle during a prior drive in which a crash occurred. In some embodiments, the method further includes identifying contiguous subsets of the collection of time-series data. In some embodiments, each contiguous subset represents a same amount of time during the prior drive as the first predefined length. In some embodiments, the method further includes generating, for each contiguous subset, a label indicating whether the crash occurred during a second time period that comprises the contiguous subset. In some embodiments, the second time period has a same length as the second predefined length. In some embodiments, the method further includes training the crash detection neural network on the contiguous subsets of the collection of time-series data and their corresponding labels.

In some embodiments, the crash detection neural network comprises a convolutional neural network layer trained to encode time-series data from a single contiguous interval of the first predefined length into discrete features that characterize spatial and temporal patterns within the time-series data of the single contiguous interval. In some embodiments, the crash detection neural network further comprises a gated recurrent unit layer trained to generate context-aware features for the single contiguous interval based on the discrete features from multiple successive intervals including the single contiguous interval.

In some embodiments, generating the crash analysis includes executing, by the application, a crash analysis neural network on the time-series data generated during the corresponding time period. In some embodiments, the crash analysis neural network is different from the crash detection neural network and comprises at least one transformer model that requires additional computations per execution compared to the crash detection neural network. In some embodiments, generating the crash analysis includes transmitting, by the application, the time-series data generated during the corresponding time period to a remote server system.

In some embodiments, a system is provided. The system includes one or more motion sensors configured to generate a stream of time-series data while the one or more motion sensors are disposed in a vehicle during a drive. The system further includes a computing device comprising one or more processors and a computer-readable medium comprising instructions that, when executed by the one or more processors, cause the one or more processors to receive, in real-time, the stream of time-series data generated by the one or more motion sensors disposed in the vehicle during the drive. The instructions further cause the one or more processors to generate, for each contiguous interval within the stream of time-series data of a first predefined length, a crash prediction. In some embodiments, the crash prediction for a contiguous interval is indicative of whether the vehicle was involved in a crash during the contiguous interval. In some embodiments, generating the crash prediction for the contiguous interval includes executing a crash detection neural network on the time-series data generated by the one or more motion sensors during a time period that comprises the contiguous interval in response to receiving the time-series data generated during the time period. In some embodiments, the time period has a second predefined length that is greater than the first predefined length. The instructions further cause the one or more processors to determine, for each crash prediction, whether the crash prediction meets one or more predefined crash detection threshold criteria. The instructions further cause the one or more processors to generate a crash analysis using the time-series data generated during the corresponding time period in response to determining that the crash prediction meets the one or more predefined crash detection threshold criteria.

In some embodiments, the one or more motion sensors are integrated within the computing device and include an accelerometer and a Global Navigation Satellite System (GNSS) receiver, and the time-series data comprises accelerometer measurements generated by the accelerometer and speed measurements generated by the GNSS receiver. In some embodiments, the time-series data comprises accelerometer measurements generated at a first sampling rate and speed measurements generated at a second sampling rate that is less than the first sampling rate, and the instructions further cause the one or more processors to generate, for each contiguous interval, interpolated speed measurements at the first sampling rate.

In some embodiments, the crash detection neural network comprises a convolutional neural network layer trained to encode time-series data from a single contiguous interval of the first predefined length into discrete features that characterize spatial and temporal patterns within the time-series data of the single contiguous interval. In some embodiments, the crash detection neural network further comprises a gated recurrent unit layer trained to generate context-aware features for the single contiguous interval based on the discrete features from multiple successive intervals including the single contiguous interval.

In some embodiments, generating the crash analysis includes executing a crash analysis neural network on the time-series data generated during the corresponding time period. In some embodiments, the crash analysis neural network is different from the crash detection neural network and comprises at least one transformer model that requires additional computations by the one or more processors per execution compared to the crash detection neural network. In some embodiments, the system further includes a remote server system, and generating the crash analysis includes transmitting the time-series data generated during the corresponding time period to the remote server system.

In some embodiments, a non-transitory computer-readable medium is provided that includes instructions that, when executed by one or more processors of a computing device, cause the one or more processors to perform operations comprising receiving, in real-time while the computing device is disposed in a vehicle during a drive, a stream of time-series data generated by one or more motion sensors disposed in the vehicle during the drive. The operations further include generating, for each contiguous interval within the stream of time-series data of a first predefined length, a crash prediction. In some embodiments, the crash prediction for a contiguous interval is indicative of whether the vehicle was involved in a crash during the contiguous interval. In some embodiments, generating the crash prediction for the contiguous interval includes executing a crash detection neural network on the time-series data generated by the one or more motion sensors during a time period that comprises the contiguous interval in response to receiving the time-series data generated during the time period. In some embodiments, the time period has a second predefined length that is greater than the first predefined length. The operations further include, for each crash prediction, determining whether the crash prediction meets one or more predefined crash detection threshold criteria. The operations further include generating a crash analysis using the time-series data generated during the corresponding time period in response to determining that the crash prediction meets the one or more predefined crash detection threshold criteria.

### BRIEF DESCRIPTION OF THE DRAWINGS

Aspects and features of the various embodiments will be more apparent by describing examples with reference to the accompanying drawings, in which:
FIG. 1 illustrates an embodiment of a system for detecting crash events, according to aspects of the present disclosure.
FIG. 2 illustrates an exemplary data flow for generating crash data from live sensor data, according to aspects of the present disclosure.
FIG. 3 illustrates an exemplary data flow for detecting potential crash events from live sensor data, according to aspects of the present disclosure.
FIG. 4 illustrates exemplary data used to train a crash detection neural network, according to aspects of the present disclosure.
FIG. 5 illustrates exemplary plots of crash detection predictions generated by different methods from collected sensor data during a drive involving a crash, according to some aspects of the present disclosure.
FIG. 6 illustrates an exemplary comparison of the performance of different crash detection methods, according to some aspects of the present disclosure.
FIG. 7 illustrates a method of detecting a crash event, according to some aspects of the present disclosure.
FIG. 8 illustrates a method of training a crash detection neural network, according to some aspects of the present disclosure.

### DETAILED DESCRIPTION OF THE INVENTION

While certain embodiments are described, these embodiments are presented by way of example only and are not intended to limit the scope of protection. The apparatuses, methods, and systems described herein may be embodied in a variety of other forms. Furthermore, various omissions, substitutions, and changes in the form of the example methods and systems described herein may be made without departing from the scope of protection.

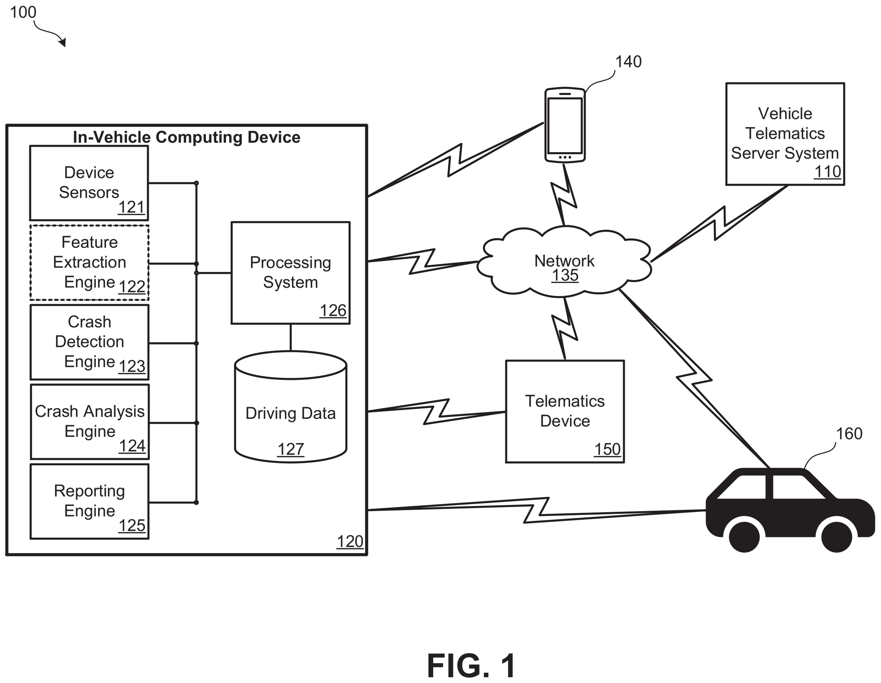

**FIG. 1** illustrates an embodiment of a system 100 for detecting crash events. System 100 can include: vehicle telematics server system 110; in-vehicle computing device 120; network 135; mobile device 140; telematics device 150; and vehicle 160. In some embodiments, one or more of the components of system 100 may be communicatively connected to other components of system 100 via network 135.

Vehicle telematics server system 110 can include one or more processors configured to perform various functions, such as confirm the occurrence of an accident from telematics data provided by one or more devices disposed in a vehicle during a drive, analyze the telematics data to reconstruct one or more features of the accident (e.g., severity and/or fault), and control whether, when, and/or what crash response services should be provisioned. Vehicle telematics server system 110 can include one or more physical servers running one or more processes. Vehicle telematics server system 110 can also include one or more processes distributed across a cloud-based server system. In some embodiments, vehicle telematics server system 110 is connected over network 135 to any or all of the other components of system 100.

Network 135 can include one or more wireless networks, wired networks, public networks, private networks, and/or mesh networks. For example, network 135 can include one or more local area networks (LANs) connected to one or more wide area networks (WANs), such as the Internet. Additionally, or alternatively, network 135 may include one or more cellular and/or satellite-based communications networks.

Vehicle telematics server system 110 may receive driving data via network 135 attributable to movement of one or more vehicles. Driving data may be derived from sensor data measurements collected from telematics devices, including but not limited to sensor-equipped smartphones, Internet of Things (IoT) devices such as DriveWell Tags^{®} and on-board diagnostics (OBD) II devices, and data from connected vehicles with embedded telematics capabilities. For example, driving data for a particular vehicle, such as vehicle 160, may be collected and/or transmitted by the vehicle itself, and/or one or more devices disposed within the vehicle. For example, mobile device 140 and/or telematics device 150 disposed within vehicle 160 during a drive may collect driving data attributable to the movement and/or operation of vehicle 160 during the drive.

In some embodiments, vehicle 160 includes one or more components that collect and process data associated with vehicle operation. For example, vehicle 160 may include a Global Positioning System (GPS) receiver, an engine control unit (ECU), transmission control unit (TCU), inertial measurement unit (IMU), collision avoidance and warning systems, radar subsystems, and the like. Additionally, or alternatively, vehicle 160 may include one or more components that transmit and receive the data associated with vehicle operation via one or more communication protocols, such as Wi-Fi^{®}, Bluetooth^{®}, cellular communications, and the like.

Mobile device 140 may be a smartphone, tablet computer, laptop computer, gaming device, or some other form of computerized device that can collect, process, transmit, and receive one or more types of data, such as motion, location, and/or driving data. Telematics device 150 may be a special purpose computer that can be permanently or semi-permanently installed within and/or communicatively connected to a vehicle, such as vehicle 160. For example, telematics device 150 may be fixed to an interior surface of a vehicle, such as a windshield, engine compartment, and the like. Additionally, or alternatively, telematics device 150 may be coupled to a data port, such as an OBD port and/or universal serial bus (USB) port of a vehicle. Once fixed to the vehicle and/or connected with a data port, telematics device 150 may collect, process, transmit, and receive one or more types of data, such as motion, location, and/or driving data, as described further herein.

Mobile device 140, telematics device 150, and/or vehicle 160 may each include one or more processors configured to collect, analyze, and transmit data attributable to movement and/or operation of a vehicle. For example, mobile device 140, telematics device 150, and/or vehicle 160 may include one or more sensors, such as a Global Positioning System (GPS) receiver, or other Global Navigation Satellite System (GNSS) receiver, one or more accelerometers, one or more gyroscopes, one or more compasses, one or more magnetometers, one or more barometers, or the like, that can be used to collect data attributable to a vehicle's location, movement, and/or operations. Additionally, or alternatively, mobile device 140, telematics device 150, and/or vehicle 160 may collect and/or receive vehicle operating data, such as vehicle speed, compass headings, or the like, from one or more components of a vehicle, such as an ECU, TCU, and the like. Motion data and/or vehicle operating data collected while driving may be referred to as driving data or telematics data.

Telematics data may refer to the unprocessed, unfiltered information gathered from various sensors and/or computing devices disposed in a vehicle during a drive, such as mobile device 140, telematics device 150, and/or vehicle 160, that pertain to a vehicle's operation and surrounding environment. This data may include GPS coordinates, accelerometer and gyroscope readings for measuring acceleration, braking, and vehicle orientation, vehicle speed, or the like. In some embodiments, such data further includes engine Revolutions Per Minute (RPM), fuel level, and other relevant vehicle parameters obtained via Bluetooth or OBD-II interfaces. Additionally, raw telematics data may encompass contextual information such as timestamps, weather conditions, and traffic congestion obtained from network connections or other external sources. The collected telematics data may be stored in a structured format, such as JavaScript Object Notation (JSON) or Comma-Separated Values (CSV), ready for further processing and analysis to derive insights into driving behavior, vehicle performance, and environmental conditions.

Telematics data may additionally, or alternatively, include processed telematics data. Processed telematics data may refer to the refined and analyzed information derived from raw telematics data. This processed data undergoes various algorithms, statistical methods, and data fusion techniques to extract meaningful insights and actionable intelligence related to vehicle operation, driver behavior, and environmental conditions. Such information may include details about the occurrence of one or more unsafe driving activities (e.g., times, locations, and severities of one or more hard braking, speeding, mobile device usage, swerving, hard acceleration, or other similar unsafe driving activities), contextual data about each drive (e.g., time-of-day, weather, traffic, road-type, extrinsic road risk), whether a crash was detected during the drive, information about a vehicle used for the drive (e.g., vehicle make, model, and year, information about device-vehicle interfaces, or the like), and other similar information.

Mobile device 140, telematics device 150, and/or vehicle 160 may transmit processed telematics data, such as indications of the occurrence of a crash involving a vehicle and related contextual data, and/or raw telematics data used to detect such crashes, to one or more devices and/or systems for additional processing. For example, in response to detecting a crash, mobile device 140, telematics device 150, and/or vehicle 160 may transmit an indication of a potential crash event to vehicle telematics server system 110. Vehicle telematics server system 110 may further use the indication of the potential crash event, and/or underlying raw telematics data collected around the time when the potential crash event occurred, to generate and/or update an assessment of the occurrence of the crash.

Additionally, or alternatively, mobile device 140, telematics device 150, and/or vehicle 160 may generate a notification in real-time, and/or near real-time, to alert the driver that a potential crash event was detected. To illustrate, mobile device 140, telematics device 150, and/or vehicle 160 may analyze raw telematics data in real-time as it is received from one or more sensors to detect the occurrence of a crash. In response to detecting the occurrence of crash, in real-time and/or near real-time, mobile device 140, telematics device 150, and/or vehicle 160 may generate an alert or other notification requesting that the user confirm or deny that a crash occurred and/or select from one or more crash service resources (e.g., to request an ambulance or tow truck).

In-vehicle computing device 120 may include one or more software and/or hardware components configured to perform initial detections of potential crash events, further analyze telematics data collected during the time around when the potential crash event occurred, and transmit an indication of the potential crash event, the underlying data used to detect the crash event, and/or any results of the further analysis, to one or more systems for additional processing, such as vehicle telematics server system 110. For example, and as illustrated, in-vehicle computing device 120 may include: device sensors 121, feature extraction engine 122, crash detection engine 123, crash analysis engine 124, and reporting engine 125. As further illustrated, in-vehicle computing device 120 can include one or more data stores and/or databases, such as driving data 127. In-vehicle computing device 120 may further include processing system 126 that can coordinate the execution of the various functionalities provided by the plurality of hardware and/or software components, in addition to communicating with the one or more data stores and/or databases.

In-vehicle computing device 120 may be a separate computing device from mobile device 140, telematics device 150, and/or vehicle 160. Additionally, or alternatively, one or more components or functionalities of in-vehicle computing device 120 may be distributed across, implemented by, or otherwise performed by a combination of mobile device 140, telematics device 150, and/or vehicle 160. For example, device sensors 121 may include various sensors of mobile device 140, telematics device 150, and/or vehicle 160, from which telematics data may be collected and/or analyzed by a processing system of a single device, such mobile device 140 and/or telematics device 150.

Device sensors 121 may include one or more hardware and/or software sensors that detect and/or measure information about a vehicle and its surroundings during a drive. For example, device sensors 121 may include an accelerometer that measures movements and orientation of in-vehicle computing device 120, a gyroscope that measures rotation about one or more axes, a magnetometer that measures orientation relative to magnetic north, a Global Navigation Satellite System (GNSS) receiver that measures location and elevation, a proximity sensor that measures distances to nearby objects, an ambient light sensor, a barometer for measuring atmospheric pressure, a temperature sensor for measuring environmental or internal device temperature, and one or more cameras for capturing images and videos across one or more spectrums if visible and invisible light.

Measurements from device sensors 121 may be sampled by processing system 126 in response to requests for measurements from crash detection engine 123. For example, in response to a request, processing system 126 may begin sampling and storing signal values for a particular sensor. Requests from the various components may include indications of the desired data collection frequency or resolution. For example, components may request that measurements be sampled at increased frequencies and/or higher resolutions to enable more accurate assessments of the motions experienced by in-vehicle computing device 120 (e.g., to detect fine movements). As another example, components may request that measurements be sampled at reduced frequencies and/or lower resolutions to save resources (e.g., battery and processing power) when making general assessments, such as determining whether acceleration measurements, changes in location, or the like are attributable to a user walking or traveling in a vehicle.

Device sensors 121 may include one or more software and/or hardware components configured to determine the location of a vehicle in which in-vehicle computing device 120 is disposed. For example, device sensors 121 may include one or more Global Navigation Satellite System (GNSS) receivers configured to receive signals from GNSS satellites and calculate the precise geographic location of the vehicle. These GNSS receivers may work in conjunction with other positioning technologies employed by in-vehicle computing device 120, such as Wi-Fi positioning, cellular triangulation, and inertial navigation, to enhance accuracy and reliability, especially in environments where satellite signals may be weak or obstructed.

Feature extraction engine 122 may include one or more processes for receiving, transforming, and/or analyzing signals from device sensors 121. As described above, raw signals may be received from one or more sensors, such as one or more accelerometers, one or more magnetometers, one or more gyroscopes, one or more GNSS receivers, one or more barometers, one or more thermostats, or the like. Feature extraction engine 122 may receive such raw signals and process them to extract features that could be used to detect the occurrence of a crash event. Examples of such processing may include: down-sampling data collected at a higher collection rate (e.g., 100 Hz) to the rate at which crash predictions may be made (e.g., 1 Hz); extracting statistically relevant values, such as the average, median, and/or mean values from the data; reorienting and/or transforming measurements (e.g., accelerometer measurements) to the reference frame of the vehicle; removing components of measurements due to gravity; filtering measurements to remove erroneous measurements; classifying and/or filtering measurements attributable to motion caused by the vehicle versus motion caused by another force (e.g., a user handling a mobile device); or the like.

Crash detection engine 123 may include one or more processes for detecting the possible occurrence of crash events from raw and/or processed data (e.g., from device sensors 121 and/or feature extraction engine 122). As described further herein, crash detection engine 123 may act as a first stage filter when detecting and reporting the occurrence of a crash event. In other words, crash detection engine 123 may perform an initial set of processes to identify instances in time during a drive when a crash event may have occurred, so that subsequent processes, such as crash analysis engine 124, may be executed to further analyze driving data collected around the identified time and make a more accurate assessment.

Crash Analysis engine 124 may include one or more processes for analyzing raw and/or processed data (e.g., from device sensors 121 and/or feature extraction engine 122) from around the time of a potential crash event (e.g., as identified by crash detection engine 123) to determine whether a crash did or did not occur. Additionally, or alternatively, crash analysis engine 124 may further identify one or more characteristics of a crash, such as the point of impact, the severity, whether airbags were deployed, contextual details (e.g., weather, time of day, road-conditions), or the like. Compared to the processes employed by crash detection engine 123, such subsequent processes may be more computationally complex in order to provide an accurate determination of whether a crash occurred. As such, using crash detection engine 123 as a first stage filter may allow in-vehicle computing device 120 to avoid potentially unnecessary resource consumption that would occur from indiscriminately applying more accurate processes and/or analyses.

Reporting engine 125 may include one or more processes for generating and/or transmitting reports of crash events. Reporting engine 125 may receive an indication of a crash event (e.g., from crash detection engine 123 and/or crash analysis engine 124) and generate a report or other indication of the detected crash event. The report may include the underlying raw and/or processed data used to detect and/or confirm the occurrence of a crash, as well as any results of further analyzing the raw and/or processed data. Once generated, the report may be transmitted to a remote server system, such as vehicle telematics server system 110, for additional processing and/or verification of the crash event. Additionally, or alternatively, reporting engine 125 may generate a notification and/or alert to a driver (e.g., via a display of mobile device 140) indicating the detected occurrence of the crash event and/or requesting confirmation from the driver that a crash occurred.

In some embodiments, the functionalities of crash detection engine 123 and crash analysis engine 124 are distributed across different physical devices within system 100. For example, crash detection engine 123 may be executed on telematics device 150. Telematics device 150 may have sufficient local processing power, such as a microcontroller or embedded processor with hardware floating-point support, to efficiently execute a crash detection neural network, as described further herein, in real time. However, telematics device 150 may have limited computational capacity, memory, or access to additional sensor modalities, which may make it impractical or impossible to execute the more computationally intensive crash analysis engine 124 locally.

In this scenario, when crash detection engine 123 running on telematics device 150 detects a possible crash event (for example, when the predicted crash probability exceeds a threshold), the telematics device 150 can transmit a segment of the relevant sensor data, or a crash event notification, to a separate device for further analysis. For instance, telematics device 150 may send the data to mobile device 140 that is co-located in the vehicle. The mobile device 140 may have a more powerful processor, additional memory, a neural processing unit (NPU), and access to additional onboard sensors (such as a barometer, microphone, or camera), as well as wireless connectivity to external data sources (e.g., weather, traffic, and map data). The mobile device 140 can thus execute the crash analysis engine 124, leveraging its increased computational resources and broader sensor/contextual input to perform a more detailed assessment of the detected event.

Alternatively, the crash detection engine 123 may be executed on mobile device 140 and, upon detecting a potential crash event, mobile device 140 may transmit the relevant window of sensor data, along with any additional contextual information, to a remote server system, such as vehicle telematics server system 110, via network 135. Vehicle telematics server system 110, which may have access to scalable cloud compute resources, can then execute crash analysis engine 124 using sophisticated neural network architectures (such as transformer models), process large volumes of data, and incorporate external data sources (e.g., historical crash statistics, weather databases, and road network maps) to generate a high-confidence analysis and response recommendation. This arrangement may further reduce the computational and energy burden on the in-vehicle or mobile device, while ensuring that detailed crash analysis is performed with the full benefit of cloud-based data and compute resources.

The distribution of crash detection and analysis functionalities across multiple devices or platforms may be dictated by a variety of practical considerations, including the computational capabilities of each device, the types and fidelity of available sensor data, the need for low-latency local detection, power consumption constraints, and connectivity to external data sources. By executing the lightweight, real-time crash detection engine 123 on a device with immediate access to the core motion sensors (e.g., telematics device 150 or mobile device 140), the system ensures prompt identification of potential crash events with minimal latency and resource usage. The more computationally intensive crash analysis engine 124, which may require access to advanced hardware (such as a GPU, NPU, or cloud compute cluster), additional sensor inputs, or external databases, can then be invoked selectively when warranted by the detection of a possible crash event. This modular and distributed approach enables flexible deployment across a wide range of vehicle platforms, device configurations, and connectivity environments, and is particularly advantageous for supporting advanced crash analysis capabilities without imposing unnecessary computational or energy burden on resource-constrained in-vehicle devices.

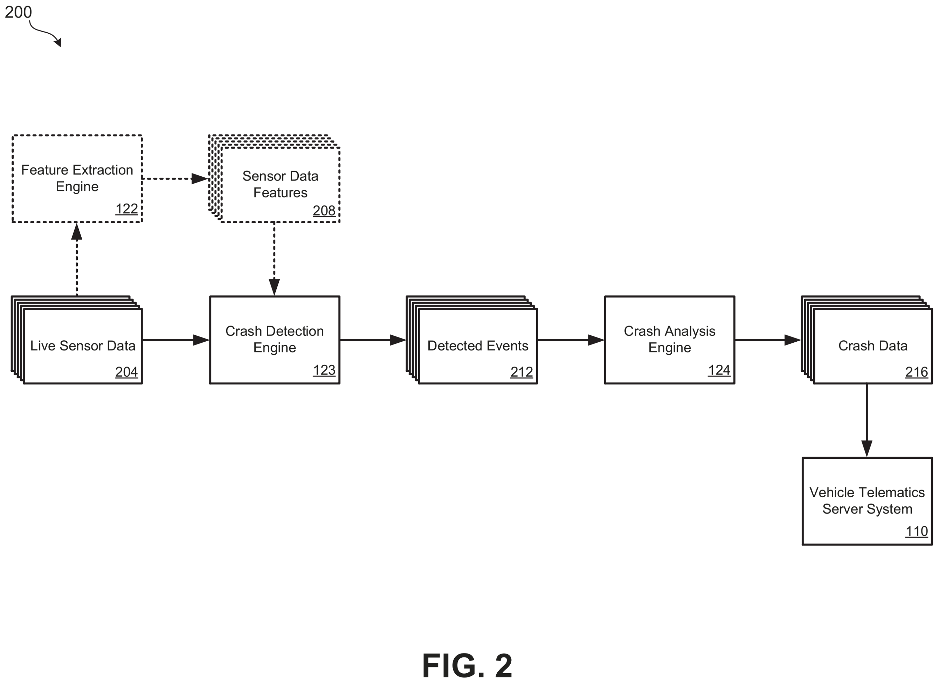

**FIG. 2** illustrates an exemplary data flow 200 for generating crash data 216 from live sensor data 204, according to some embodiments. As illustrated, the process may be performed by one or more components of system 100 described above, such as feature extraction engine 122, crash detection engine 123, crash analysis engine 124, and vehicle telematics server system 110. As further illustrated, the process may begin with live sensor data 204 being provided to feature extraction engine 122 and/or crash detection engine 123. As described above, live sensor data 204 may include raw and/or unprocessed sensor data from one or more sensors disposed in a vehicle during a drive, such as device sensors 121. For example, live sensor data 204 may include accelerometer signals from one or more accelerometers (e.g., a 3-axis accelerometer), gyroscope signals, magnetometer signals, GPS data (e.g., GPS speed data), barometer signals, or the like. Live sensor data 204 may be collected and/or measured by the one or more sensors at various collection frequencies depending on the abilities of the sensor, the desired accuracy of subsequent analysis, memory and/or processing bandwidth, or the like. For example, live sensor data 204 may include accelerometer measurements taken at 25 Hz, 50 Hz, 100 Hz, or another suitable collection frequency.

As described above, feature extraction engine 122 may analyze live sensor data 204 to produce sensor data features 208. Sensor data features 208 may include simplified and/or transformed data derived from live sensor data 204 for subsequent analysis by crash detection engine 123. For example, measurements collected at 100 Hz may be down-sampled to correspond with the frequency at which crash detection engine 123 determines whether a crash has occurred and/or the period of time analyzed by crash detection engine 123, as described further herein.

Processing live sensor data 204 to extract relevant sensor data features 208 may enable crash detection engine 123 to use algorithms that are both time and resource efficient when detecting the occurrence of a potential crash event. For example, given preprocessed features extracted from the measurements collected for each second of sensor data, crash detection engine 123 could employ a linear discriminant analysis (LDA) model to generate a probability that a crash occurred, or was occurring, during that period of time.

While such initial processing by feature extraction engine 122 may allow crash detection engine 123 to be more efficient, the time and resources (e.g., processing power and memory) required to perform the initial processing may not be trivial. For example, while identifying the median acceleration value for one second from 100 values collected during that second may seem trivial in the abstract, implementation in software can involve significant computational overhead. The software must efficiently handle large datasets in real-time, manage memory allocation, and ensure minimal latency to maintain responsiveness. As another example, the process of removing the gravity component from acceleration data requires accurate and continuous monitoring of the device's orientation, further adding to the computational complexity.

Accordingly, and as indicated by the dotted outlines around feature extraction engine 122 and sensor data features 208, such steps may be optional in view of improved implementations of crash detection engine 123, as described further below. For example, implementing crash detection engine 123 with an Incremental Convolutional Neural Network (ICNN), or other machine learning model, can allow for direct processing of live sensor data 204 (e.g., raw or otherwise unprocessed sensor data), to detect potential crash events.

As such, and in some embodiments, crash detection engine 123 may receive live sensor data 204 in real-time, and/or near real-time, and generate detected events 212. Crash detection engine 123 may process live sensor data 204 and generate a prediction that a crash event occurred. Crash detection engine 123 may generate the prediction at predefined intervals, such as every second, every 5 seconds, every 10 seconds, or the like. The prediction may include the probability or likelihood that a crash occurred at a particular point in time and/or within a particular period of time. For example, crash detection engine 123 may generate a prediction for each second of a drive indicating the likelihood that a crash event occurred at that second. As another example, crash detection engine 123 may generate a prediction for contiguous windows or intervals of time during a drive indicating the likelihood or probability that a crash event occurred during each window of time.

In some embodiments, the predictions for a point in time during a drive are based on live sensor data 204 collected before and/or after the point in time. For example, crash detection engine 123 may generate a prediction that a crash event occurred at a particular timestamp based on live sensor data 204 collected 5 seconds, 10 seconds, or more, after the timestamp. As described further herein, generating predictions for a timestamp based on sensor data collected after the timestamp may allow crash detection engine 123 to produce more accurate predictions. As a result, crash detection engine 123 can minimize the number of false-positive crash detections, thereby reducing unnecessary resource consumption by more computational and/or memory intensive processes, such as those performed by crash analysis engine 124. Additionally, or alternatively, by reducing false-positive crash detections, additional resources may be provided to those subsequent processes to increase the accuracy of their results, as described further herein.

Detected events 212 may include all of the predictions generated by crash detection engine 123 from live sensor data 204. Additionally, or alternatively, detected events 212 may include a subset of the predictions, for which the associated likelihood or probability exceeds a predefined threshold. For example, while crash detection engine 123 may generate predictions once every second, each including a likelihood or probability that a crash occurred at that second, detected events 212 may include only those predictions where the likelihood or probability exceeds a predefined threshold associated with performing additional analysis.

In some embodiments, crash detection engine 123 provides a detected event to crash analysis engine 124 as a single timestamp indicating that there is a high likelihood that a crash occurred at the time corresponding to the timestamp. In response, crash analysis engine 124 may query (e.g., from driving data 127) the sensor data collected before and/or after the timestamp. Additionally, or alternatively, crash detection engine 123 may provide the timestamp and the underlying data used by crash detection engine 123 to identify the timestamp as the time of a potential crash event to crash analysis engine 124.

As described above, crash analysis engine 124 may proceed to analyze the data collected before and/or after the time of a potential crash event identified by crash detection engine 123 to generate a new prediction of whether a crash occurred at that time. The new prediction may be based on additional data, such as additional data collected since the initial crash detection generated by crash detection engine 123 and/or data from other sources not considered by crash detection engine 123. For example, crash detection engine 123 may generate crash predictions based on accelerometer measurements and GPS speed measurements while crash analysis engine 124 may consider data from additional sensors, such as gyroscopes, barometers, microphones, or the like, in combination with contextual data derived from other sources, such as weather data, road conditions (e.g., based on GPS locations), or the like. Limiting crash detection engine 123 to a subset of the available data that is most indicative of crash events may allow crash detection engine 123 to be more efficient and further reduce unnecessary resource consumption.

Crash analysis engine 124 may produce crash data 216 with similar information as detected events 212. For example, crash data 216 may include a new probability that a crash occurred at a particular time. Additionally, or alternatively, crash data 216 may include the underlying data used by crash analysis engine 124 to generate the new probability. As described above, crash data 216 may be provided to vehicle telematics server system 110 for additional processing and/or verification that a crash did or did not occur. For example, crash data 216 may be transmitted to vehicle telematics server system 110 in response to determining that the new probability from crash analysis engine 124 exceeds a predefined threshold.

In practice, it is not feasible to execute the crash analysis engine 124 on all of the live sensor data 204 collected during a drive. The primary reason for this is the significant computational cost associated with the more advanced algorithms and models used within crash analysis engine 124. For instance, transformer-based neural network architectures, which may be employed by crash analysis engine 124, are designed to process sequences of data with sophisticated attention mechanisms that allow the model to weigh and relate information across all time steps in the input window. Unlike traditional recurrent or convolutional neural networks, which operate with local or sequential dependencies, transformer models compute pairwise relationships between all positions in the sequence simultaneously.

This attention-based computation typically requires the formation of large, dense matrices representing the relationships between each pair of time steps in the input sequence. The memory and processing requirements for these computations scale quadratically with the length of the input sequence. For example, analyzing just 10 seconds of sensor data sampled at 100 Hz (i.e., 1,000 time steps) would require the transformer model to construct and process attention matrices with one million entries (1,000 × 1,000). When multiple sensor channels are included, and when processing must be performed repeatedly across overlapping intervals or multiple drives, the cumulative computational burden becomes considerable.

Furthermore, transformer architectures often have a larger number of parameters and require greater floating point operations per inference than the CNN-GRU architectures described for crash detection engine 123. This results in longer processing times, increased energy consumption, and higher memory usage-characteristics that may be incompatible with the real-time, resource-constrained environments typical of in-vehicle computing devices or mobile devices. Running such analysis continuously on all live sensor data would not only risk overwhelming the device, but could also lead to increased battery drain, overheating, and degraded user experience.

By contrast, the crash detection engine 123 is expressly designed for efficient, real-time operation. Its architecture, which may combine convolutional and recurrent layers (such as GRU), focuses on detecting the most salient patterns and temporal sequences associated with crash events using computationally lightweight operations. The crash detection engine 123 is able to process incoming sensor data at a high frequency, generating preliminary crash predictions at regular intervals (e.g., every second) with minimal resource consumption.

The technical advantage of this two-stage design is that the crash detection engine 123 acts as a selective filter or "first-pass" classifier. It identifies only those intervals of sensor data that are likely to correspond to crash events-i.e., intervals where the crash prediction exceeds a predefined threshold. Only these intervals, along with their surrounding context, are then forwarded to the crash analysis engine 124 for deeper analysis. This targeted invocation of the more computationally demanding crash analysis engine 124 dramatically reduces the overall processing load. For example, if crash detection engine 123 identifies potential crash events in just 0.01% of all processed intervals, the crash analysis engine 124 may be run on only a tiny fraction of the total data, yielding large savings in computation, memory, and energy.

When the crash analysis engine 124 is invoked, it can employ its transformer-based model to extract rich, context-aware features from the relevant segment of sensor data. Transformer models are particularly well-suited to capturing complex, long-range dependencies and integrating multi-modal signals (e.g., accelerometer, gyroscope, speed, contextual data) for a more accurate assessment of crash circumstances. The self-attention mechanism allows the model to focus on the most informative time points and sensor channels when making its determination, which can be critical for reconstructing the sequence and dynamics of a crash event.

In summary, the improvements to crash detection engine 123 are valuable because they enable efficient, accurate pre-filtering of live sensor data, ensuring that the resource-intensive crash analysis engine 124 is only applied when truly warranted. This system architecture provides both real-time responsiveness and computational scalability, making advanced crash analysis feasible on embedded and mobile platforms. It also enables more sophisticated post-processing, such as determining crash severity, impact direction, and ancillary factors, without imposing unnecessary burden on the overall system.

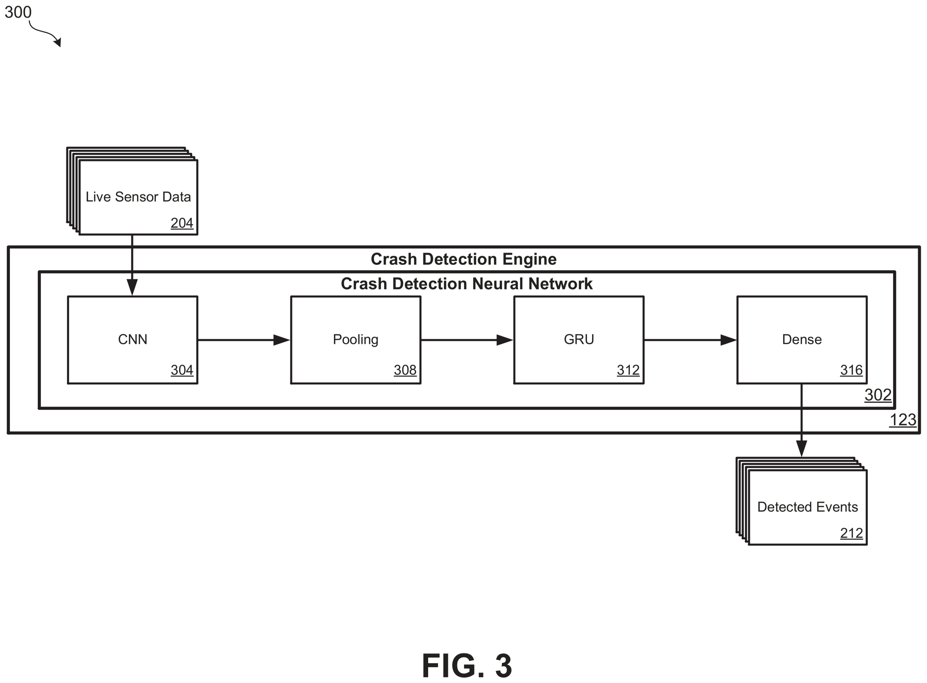

**FIG. 3** illustrates an exemplary data flow 300 for detecting potential crash events from live sensor data 204, according to some embodiments. As illustrated, the process may be performed by one or more components of system 100 described above, such as crash detection engine 123. As described above, crash detection engine 123 may be implemented with, or otherwise execute, an ICNN or other machine learning model, such as crash detection neural network 302. Crash detection neural network 302 may include various layers designed to process live sensor data 204, such as accelerometer measurements and/or GPS speed measurements, to detect instances and/or occurrences of crash events. For example, and as illustrated, crash detection neural network 302 may include: one or more Convolutional Neural Network (CNN) layers 304; one or more pooling layers 308, one or more Gated Recurrent Unit (GRU) layers 312; and one or more dense layers 316.

Crash detection neural network 302 may receive, as input, a collection of sensor measurements, or live sensor data 204, acquired in real-time during a vehicle drive. These sensor measurements may originate from multiple sources, including one or more accelerometers positioned to capture motion along three orthogonal axes, a GNSS receiver providing speed and position information, and optionally additional sensors such as gyroscopes or magnetometers. Each sensor may produce a stream of measurements indexed by timestamps, resulting in time-series data for each modality.

To facilitate joint analysis, data from these different modalities can be combined into a variety of data structures suitable for neural network processing. In some embodiments, the sensor data for a given interval can be organized as a multi-dimensional array, where each row corresponds to a discrete time step (e.g., every 10 milliseconds for a 100 Hz sample rate), and each column corresponds to a sensor channel (such as X, Y, Z acceleration and speed). Alternatively, the data may be structured as a list of objects, where each object contains timestamped sensor readings for all modalities at a given time step. In other implementations, the data may be stored in a tensor, with dimensions for time, sensor channel, and potentially batch index for parallel processing. For more complex or tabular data, a dataframe may be used, with columns representing sensor channels and rows representing sequential samples. In some cases, a dictionary of arrays may be employed, mapping each modality to its own array of time-series samples, all indexed by a common timestamp.

Regardless of the chosen data structure, a new instance of the data structure may be generated for each analysis interval. For example, to perform crash detection for each one-second window of time during a drive, a new array (or object, tensor, dataframe, etc.) may be constructed containing the sensor data collected during that particular second. This per-interval instantiation ensures that the neural network receives temporally segmented data, allowing it to make independent predictions for each interval. Generating a new instance per interval also facilitates efficient real-time processing and aligns the data input with the prediction output, so that each probability score produced by the network corresponds directly to a specific time window.

As an exemplary, suppose live sensor data 204 is sampled at 100 Hz. For each one-second analysis window, or interval, the input data structure would contain 100 samples per sensor channel. If four sensor channels are used (e.g., three axes of acceleration and speed), the resulting multi-dimensional array would have a shape of [100, 4]. At the start of each new second, the system constructs a fresh array (or equivalent structure) containing the relevant data for that interval, which is then passed to the crash detection neural network 302. This design supports continuous, real-time evaluation, ensuring timely detection of crash events and minimizing latency in subsequent analysis or alerting actions.

In many practical implementations, different sensor modalities may collect data at different sampling rates. For example, an accelerometer may provide measurements at a high frequency, such as 100 Hz (i.e., 100 samples per second), while a GNSS receiver may provide speed measurements at a lower frequency, such as 1 Hz (i.e., one sample per second). To enable synchronous analysis of these multimodal inputs, the system can employ various techniques to align sensor data to a common temporal basis before constructing the input data structure for each analysis interval.

In some embodiments, the lower-frequency data is upsampled so that each sensor channel provides values at the same sample times. In the example above, where the accelerometer produces 100 samples per second and the speed sensor produces only one, the system can interpolate the speed data to estimate speed values at each of the 100 time points corresponding to the accelerometer readings. This interpolation may be performed using linear interpolation between consecutive speed measurements, or by holding the last-observed value constant until the next sample is available (zero-order hold). For instance, if the speed at the start of the interval is 20 mph and the speed at the end is 22 mph, linear interpolation would assign gradually increasing values to the intermediate time points. The upsampled speed data can then be integrated directly into the multi-dimensional array or tensor alongside the high-frequency accelerometer data, ensuring that every row contains temporally aligned measurements for all sensor channels.

Additionally, or alternatively, the higher-frequency sensor data may be downsampled to match the rate of the lower-frequency data. In the same example, the accelerometer data could be aggregated to produce summary statistics (e.g., mean, maximum, minimum, or standard deviation) over each one-second interval to align with the speed measurements. The resulting downsampled features can then be concatenated with the speed data to form input vectors for each interval.

By aligning all sensor channels to a common temporal grid, either through upsampling, downsampling, or a combination of both, the system ensures that the input data structure for each analysis interval provides a consistent, synchronized view of the multimodal sensor environment. This alignment can result in more accurate real-time crash detection, as it enables the neural network to analyze the relationships between different sensor modalities at each point in time.

The one or more CNN layers 304 may be designed to extract local patterns and features from live sensor data 204. By applying convolutional filters (kernels) that slide over the input data, the one or more CNN layers 304 encode the time-series data from each interval into discrete features that capture important patterns such as sudden changes in acceleration or speed that may indicate a crash. These features, or feature maps, highlight the presence of specific patterns detected by the filters, enabling the network to learn hierarchical representations of the input data related to vehicle dynamics.

Each convolutional layer may comprise a set of learnable filters (for example, 32 distinct filters in a typical implementation), where each filter is defined by a set of weights spanning a small number of consecutive time steps (the filter's kernel width) and all available sensor channels. For instance, a filter may cover 5 or 10 time steps by 4 sensor channels, enabling it to detect localized events that unfold rapidly and may involve several sensor modalities simultaneously. The layer applies each filter by sliding it across the temporal dimension of the input array and computing a dot product between the filter weights and the corresponding local patch of sensor data at each position. The resulting output is a feature map for each filter, indicating the degree to which that learned pattern is present at every point within the single interval.

During training, these filters learn to recognize patterns that are statistically associated with crash events. For example, one filter may become sensitive to a rapid deceleration profile in the speed channel, while another might activate in response to a high-magnitude, brief spike in the vertical acceleration channel. Yet another filter might learn to detect oscillatory acceleration patterns characteristic of a vehicle collision followed by secondary impacts or vibrations. These filters may be trained on labeled datasets so they encode features that are most discriminative for crash detection within a single interval.

The output of the CNN layer thus consists of a set of feature maps, each summarizing the temporal activation of a particular learned pattern within the one-second interval. These feature maps encode discrete features that capture both spatial relationships (across different sensor channels at a given time) and temporal patterns (across adjacent time steps within the interval). For example, a CNN filter may strongly activate in response to a sudden drop in speed followed by a spike in acceleration, or to a cluster of high-frequency oscillations in all three axes. Because the convolutional filters are applied uniformly across the interval, the network exhibits translation invariance, meaning it can detect these patterns regardless of their exact position within the interval.

For example, in a dataset of labeled crash events, the CNN might learn filters that respond to (i) a sudden drop in speed followed by a spike in acceleration, or (ii) a cluster of high-frequency oscillations in all three axes of acceleration, which are often observed during vehicle rollovers. Such learned patterns are then passed to subsequent pooling layers for further abstraction.

By transforming the raw time-series data from each single contiguous interval into a compact set of high-level features, the CNN layer enables the network to efficiently summarize the spatial and temporal characteristics of driving events. These discrete features are then passed to subsequent layers, such as pooling, recurrent, or dense layers, for further modeling of sequence dependencies and final crash prediction. This architecture ensures that critical, interval-specific signal patterns are systematically detected and encoded for robust, real-time crash detection.

The one or more pooling layers 308 may serve to reduce the dimensionality of the feature maps generated by the one or more CNN layers 304 while retaining the most significant information. It may achieve this by sliding a window (e.g., 2x2) over the feature map and selecting the maximum value within each window. This dimensionality reduction may help manage the computational load and control overfitting, especially given high-frequency input data, such as 100 Hz accelerometer data. By focusing on the most prominent features, the one or more pooling layers 308 may ensure that critical signals indicative of a crash are preserved.

The pooling layers 308, typically implemented as max pooling, process the feature maps produced by the CNN layers to reduce dimensionality and summarize the most salient temporal activations. Max pooling operates by dividing each feature map into overlapping or non-overlapping windows (for instance, windows of 20 time steps) and selecting the maximum value within each window. This process results in a compressed representation that retains only the strongest activations, corresponding to the most prominent occurrences of learned patterns.

The one or more pooling layers 308 may enable crash detection neural network 302 to mitigate sensitivity to small variations in the timing of detected events. For example, if an acceleration spike occurs slightly earlier or later than in the training data, max pooling ensures that its detection is robust as long as it occurs within the pooling window. This property is especially valuable in real-world scenarios where sensor data may be subject to jitter, latency, or minor misalignment.

The one or more pooling layers 308 may also serve to reduce the computational burden on downstream layers by shrinking the size of the feature maps. For example, a feature map with 1,000 time steps can be reduced to 50 pooled activations using a window size of 20, making subsequent sequence modeling more tractable. Finally, the one or more pooling layers 308 may act as a form of abstraction, grouping together temporally proximate events that are similar in character. This abstraction helps the network generalize across variations in crash dynamics, such as the difference between a single high-magnitude impact and a series of smaller impacts occurring close together.

As an illustrative example, consider a scenario where a crash produces a large acceleration spike followed by several smaller oscillations. Max pooling will capture the largest spike and nearby activations, ensuring that the network's attention is focused on the most critical signal events rather than on minor timing discrepancies.

The one or more GRU layers 312 may include one or more recurrent neural networks (RNNs) that specialize in handling sequential data and capturing temporal dependencies. In the context of live sensor data 204, the one or more GRU layers 312 can process time-series data of accelerometer and/or speed measurements, allowing the network to understand how these variables change over time before, during, and after a crash. The gating mechanisms within GRUs regulate the flow of information, enabling the network to remember important sequences of data while discarding less relevant information. This makes the GRU layer particularly effective in detecting patterns over time that may indicate the occurrence of a crash.

The one or more GRU layers 312 may be designed to analyze the pooled feature vectors generated by the previous layers over time. GRU layers are a form of recurrent neural network (RNN) that incorporate gating mechanisms (e.g., update and reset gates) to control how information flows through the network. These mechanisms allow the GRU to selectively retain or discard information about past inputs, making it highly effective for modeling temporal dependencies in sequential data.

As one or more GRU layers 312 process the pooled feature vectors for each interval, it maintains an internal hidden state that summarizes the relevant events that have occurred so far. This hidden state is updated at each timestep based on both the current pooled input and the previous state. The GRU thus "remembers" the order and timing of critical features, such as whether a deceleration event was immediately followed by an acceleration spike, or whether multiple impact-like activations occurred in rapid succession.

The ability to model event sequences may enable crash detection neural network 302 to distinguish between different types of crashes and between crashes and non-crash events. For instance, a rear-end collision might be characterized by a sudden deceleration followed by a spike in longitudinal acceleration, while a side-impact collision could produce a different sequence of activations across the lateral acceleration channel. Non-crash events, such as hard braking without collision, may produce similar features but in a different order or at different magnitudes.

The one or more GRU layers 312 may be trained jointly with the preceding CNN and pooling layers using supervised learning and labeled training data. In the context of crash detection, each interval of input training data may be paired with a ground truth label that indicates whether a crash occurred within a designated period. The training process may involve presenting the network with multiple time-aligned sequences of sensor data, each annotated with a binary label (crash or no crash) or, in some embodiments, a probabilistic confidence score.

As described further herein, the labeling of the training data may be structured to match the temporal context considered by the one or more GRU layers 312 when making a prediction for a given interval. For example, if the GRU is configured to analyze a window of 10 contiguous one-second intervals (i.e., 10 seconds of data) in order to generate a prediction for a particular one-second interval may be set to indicate that a crash occurred if a crash is present at any point within the 10-second window. This means that all intervals within the window that may contribute to a crash prediction are labeled consistently, reflecting the presence of crash-related activity somewhere within the GRU's receptive field.

To illustrate, consider a scenario where a crash event occurs at time t = 5 seconds during a drive. For the interval spanning t = 1 second to t = 10 seconds, the corresponding label would indicate a crash occurred, since the GRU, when generating its prediction for any of these intervals, is provided with input data covering the entire 10-second window that includes the crash event. This approach ensures that the GRU learns to associate not only the local patterns that immediately precede the crash, but also the sequence and evolution of signal changes occurring in the moments leading up to and following the event. In contrast, intervals for which the entire 10-second window contains only non-crash activity are labeled as non-crash, allowing the network to differentiate between normal driving behaviors and crash sequences.

This labeling strategy may enable the one or more GRU layers 312 to be trained to recognize complex temporal relationships and patterns that are indicative of crash events, even when those patterns are distributed across several seconds of sensor data. For example, the CNN layers may detect the presence of a deceleration pattern and a subsequent acceleration spike within the 10-second window, while the GRU learns that the specific sequence "deceleration followed by spike" is a stronger indicator of a crash than the inverse. As a result, the output of the GRU layers is a temporally-aware feature vector that encodes both what events occurred and when they occurred within the analyzed window.

By aligning the training labels with the full temporal context used by the one or more GRU layers 312 for each prediction, the network is able to learn subtle dependencies and timing relationships between events, such as the difference between a hard brake that is not followed by a collision, versus one that is immediately succeeded by impact-like accelerations. This enables the GRU-enhanced crash detection network to deliver robust, context-sensitive predictions that account for the full sequence of events surrounding a potential crash, ultimately improving detection accuracy and reducing false positives.

The one or more dense layers 316, also known as fully connected layers, may be used for the final classification task of determining whether a crash occurred based on the features extracted by the previous layers. Each neuron may receive an input from every neuron in the preceding layer, allowing for the combination of features into higher-level representations. The one or more dense layers may apply non-linear activation functions (e.g., ReLU, softmax) to produce the final output, which may include a prediction of whether a crash occurred for each second of data. This decision-making process leverages the learned features to make accurate predictions based on live sensor data 204.

The one or more dense layers 316 may perform the final aggregation and classification based on the temporally-aware features produced by the one or more GRU layers 312. Each neuron in a dense layer may receive input from every neuron in the previous layer, allowing the network to integrate information about the presence, magnitude, and sequence of crash-related features.

The dense layers can include one or more hidden layers with non-linear activation functions, such as rectified linear unit (ReLU), which enable the network to model complex relationships between input features and the likelihood of a crash. In the output layer, a sigmoid activation function may be used to produce a probability score between 0 and 1, indicating the confidence that a crash occurred during the analyzed interval. Alternatively, a softmax activation may be employed if the network is configured to output multi-class predictions, such as "no crash," "probable crash," or "confirmed crash."

Training of the dense layers, along with the preceding CNN, pooling, and GRU layers, can be performed end-to-end using a loss function such as binary cross-entropy. Labeled training data, where each time window is annotated with the ground truth (crash or no crash), can be used to optimize all network parameters simultaneously. This ensures that feature extraction, sequence modeling, and decision logic are all tuned for maximal detection accuracy.

For example, during training, the network may learn that the combination of a strong deceleration, a large acceleration spike, and a specific sequence detected by the GRU corresponds to a high probability of a crash. At inference time, the network processes new sensor data in real-time and outputs a probability score for each analysis interval. If the score exceeds a predefined threshold (such as 0.8), the system can trigger downstream actions, including more detailed crash analysis, report generation, or immediate alerts to relevant stakeholders.

In practice, the dense layer output enables the system to deliver robust, interval-by-interval crash predictions that reflect both the raw sensor measurements and their learned temporal relationships, providing actionable information for vehicle safety monitoring and incident response.

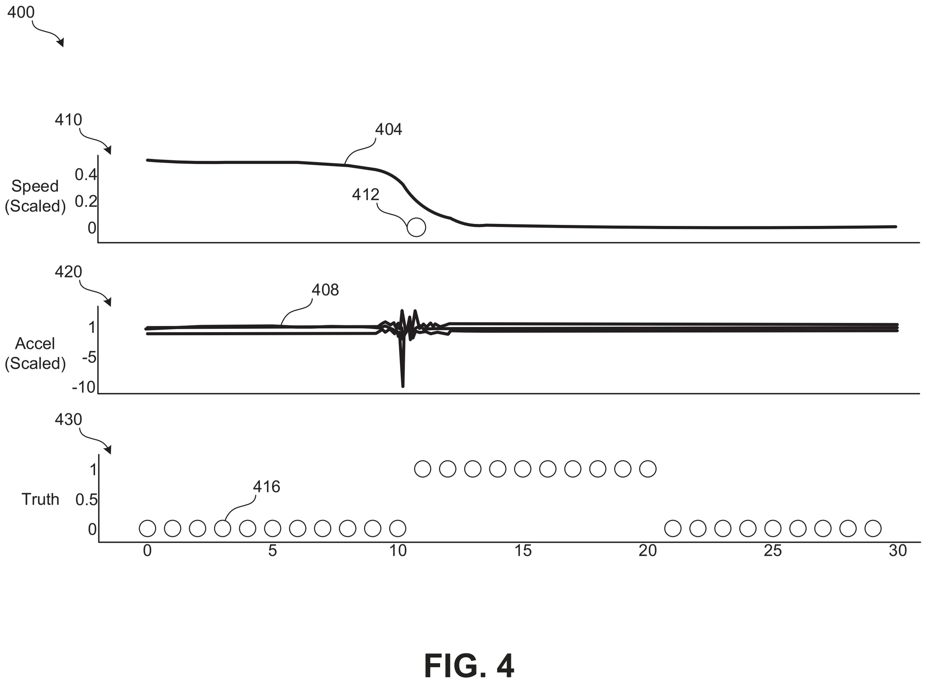

**FIG. 4** illustrates exemplary data 400 used to train a crash detection neural network, according to some embodiments. As illustrated, data 400 includes a first plot 410 of speed measurements 404, a second plot 420 of scaled accelerometer measurements 408, and a third plot 430 of truth data 416. Speed measurements 404 and scaled accelerometer measurements 408 may be collected by one or more sensors of a device disposed in a vehicle during a drive in which a verified crash occurred. As described above, accelerometer measurements 408 may include acceleration values for three orthogonal axes as measured by a 3-axis accelerometer. Speed measurements 404 may be generated by a GNSS receiver.

As illustrated, speed measurements 404 and accelerometer measurements 408 are illustrative of measurements collected before and after a crash 412. For example, at approximately 10 seconds into the data, speed measurements 404 drop to, and remain at, zero. At approximately the same time, accelerometer measurements 408 indicate that large acceleration forces were measured along all three axes of the accelerometer.

Based on external confirmation that speed measurements 404 and accelerometer measurements 408 do or do not include measurements from an actual vehicle crash, truth data 416 may be defined for crash 412 and provided along with speed measurements 404 and accelerometer measurements 408 to train a crash detection neural network, such as crash detection neural network 302, to detect crashes from accelerometer and speed measurements in the future. Each value in truth data 416 may indicate whether a verified crash event occurred during a predefined amount of time leading up to the time represented by the truth data. For example, and as illustrated, the values of truth data 416 leading up to crash event 412 are equal to zero, indicating that speed measurements 404 and accelerometer measurements 408 for the previous ten seconds do not include data collected during a crash. Subsequently, the values of truth data 416 for the ten seconds after and including crash event 412 are equal to one, indicating that speed measurements 404 and accelerometer measurements 408 for the previous ten seconds leading up to each datapoint include measurements collected during a crash.

Training a crash detection neural network on measurement data labeled in this way may improve the model's robustness and generalization by providing a broader context, allowing it to identify pre-crash and post-crash indicators. It also makes the training data more robust to noise and variability, reducing the risk of learning spurious correlations. Additionally, the expanded labeling provides more positive examples for the network to learn from, enhancing its ability to generalize and develop a nuanced understanding of crash-related behavior. This method also improves the model's sensitivity, enabling it to recognize the occurrence of a crash by considering a time window that includes the crash event and the immediate aftermath, rather than a single moment. This capability is critical for real-time applications where immediate response is necessary. In summary, defining the truth data with a ten-second window starting from the time of the crash allows the ICNN to leverage its components more effectively, improving feature extraction, temporal dependency learning, and final decision making, resulting in a more robust, sensitive, and accurate predictive model compared to labeling only the exact-time of a crash event.

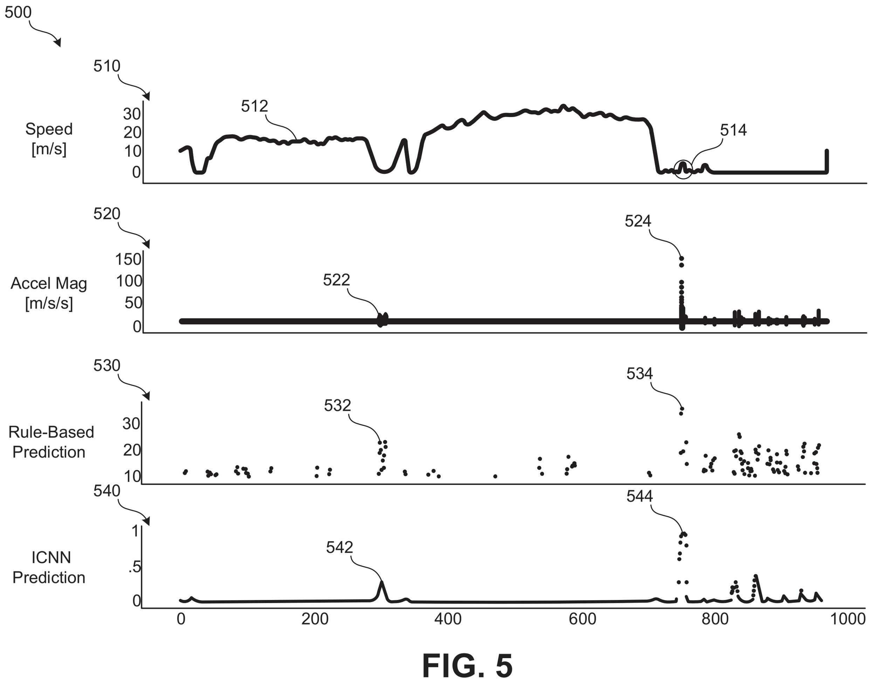

**FIG. 5** illustrates exemplary plots 500 of crash detection predictions generated by different methods from collected sensor data during a drive involving a crash, according to some embodiments. First plot 510 illustrates measured speed 511 in meters per second over time during the drive. Second plot 520 illustrates measured acceleration magnitude 521 in meters per second per second over time during the drive. Third plot 530 illustrates crash prediction values 531 generated by a first crash detection method. The first crash detection method may generate crash prediction values from preprocessed sensor data (e.g., sensor data features 208). The first crash detection method may generate crash predictions at a predefined frequency. For example, a new crash prediction value may be generated for each second of sensor data. Each crash prediction value for a period of time may be based on features extracted from the sensor data collected during the period of time and indicate the likelihood that a crash occurred during that period of time. As illustrated, third plot 530 may include a filtered subset of the crash predictions for which the likelihood was above a predefined threshold (e.g., a likelihood threshold of 10).

Fourth plot 540 illustrates crash prediction values 541 generated by a crash detection neural network, such as crash detection neural network 302. The crash detection neural network may generate crash predictions at a predefined frequency. For example, the crash detection neural network may generate a crash prediction for each second of the drive, or other predefined length of time. Compared to the first crash detection method, each crash prediction value for a period of time (e.g., for each second of a drive) generated by the crash detection neural network may be based on the raw sensor data collected during the period of time, as well as the raw sensor data collected for a predefined amount of time before and/or after the period of time. For example, for each second of the drive, the prediction generated by the crash detection neural network for that second may be based on raw sensor data collected during that second, as well as the raw sensor data collected over the ensuing ten seconds.

As illustrated, second plot 520 includes first spike 522 at approximately 300 seconds into the drive. Second plot 520 also includes second spike 524 at approximately 750 seconds into the drive, which corresponds to the time at which crash 512 occurred. Based on features extracted from the speed and acceleration magnitude measurements at first spike 522 and second spike 524, the first crash detection method may generate first crash prediction values 532 and second crash prediction values 534 that are higher in value compared to surrounding crash prediction values generated. Based on the first crash prediction values 532 and second crash prediction values 534 being higher than a predefined threshold, a false-positive crash event may be detected for first spike 522 and a true-positive crash event may be detected for second spike 524.

As further illustrated in first plot 510, speed 511 was at zero at approximately the same time, or just slightly after, first spike 522, indicative of a vehicle coming to an abrupt stop, which is consistent with a determination that a crash occurred. However, speed 511 increases again shortly after first spike 522, indicating that the vehicle continued driving, which contradicts a determination that a crash occurred. By comparison, speed 511 remains at, or close to zero after second spike 524, consistent with a determination that second spike 524 was caused as a result of a crash. As further illustrated in fourth plot 540, the crash detection neural network may generate elevated crash prediction values close in time to first spike 522 and second spike 524. However, because the crash detection neural network is able to consider additional data collected after the time of first spike 522, the crash prediction values close in time to first spike 522 are still relatively low in comparison to the crash prediction values close in time to second spike 524.

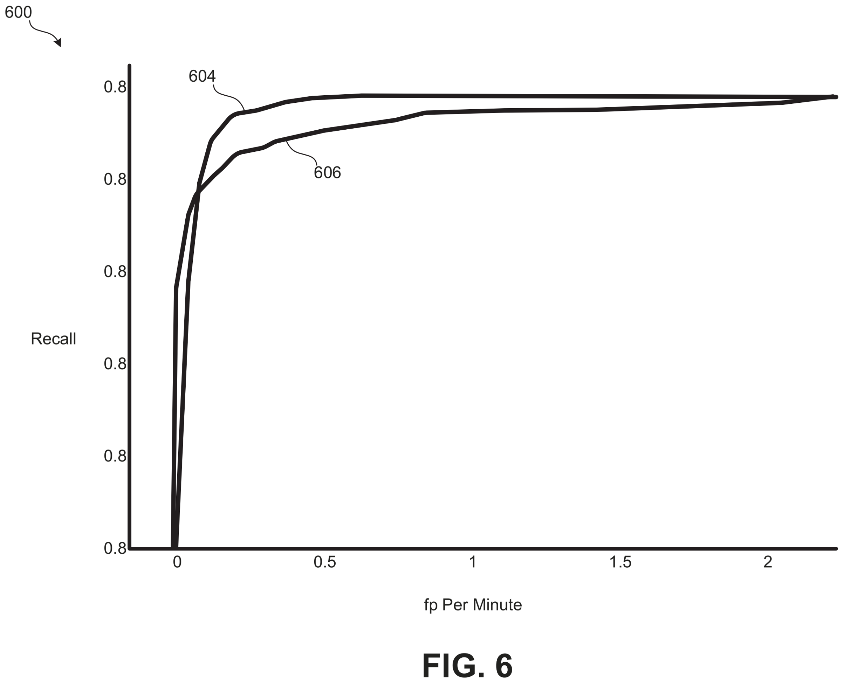

**FIG.** 6 illustrates an exemplary comparison 600 of the performance of different crash detection methods, according to some embodiments. As illustrated, comparison 600 includes graph 602 with the values along the y-axis representing the recall rate, or proportion of actual crash events correctly identified out of the total actual crash events in the dataset, with a maximum value on the y-axis of 1, indicating that every actual crash event was correctly identified. The values along the x-axis represent the number of times a non-crash event was incorrectly identified as a crash event, with lower values on the x-axis indicating fewer false positives.

As further illustrated, graph 602 includes a first plot 604 of the performance of a crash detection neural network, such as crash detection neural network 302, and a second plot 606 of the performance of an LDA-based crash detection model. Based on the comparison between first plot 604 and second plot 606, it can be seen that, as recall increases for each method, the number of false positives also increase. However, compared to the performance of the LDA-based crash detection model, the crash detection neural network is able provide significantly higher recall rates while maintaining a lower rate of false positives. This indicates that the neural network is more effective at accurately identifying crash events without generating as many false-positives, making it a more reliable and robust solution for real-time crash detection in vehicle applications.

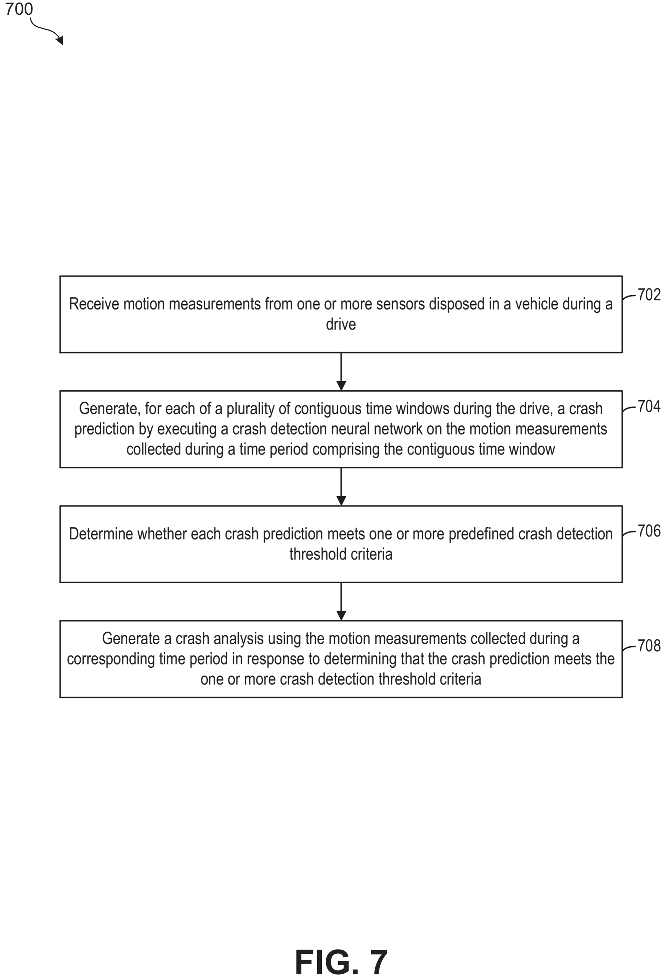

**FIG.** 7 illustrates a method 700 of detecting a crash event, according to some aspects of the present disclosure. Steps of method 700 may be performed in any order and/or in parallel, and one or more steps of method 700 may be optionally performed. One or more steps of method 700 may be performed by one or more processors. Method 700 may be implemented as a computer-readable medium or computer program product comprising instructions which, when the program is executed by one or more processors, cause the one or more processors to carry out the steps of method 700.

Step 702 includes receiving, in real-time or near real-time, motion measurements from one or more sensors disposed in a vehicle during a drive. The sensors may include accelerometers, GNSS receivers (e.g., GPS), gyroscopes, magnetometers, barometers, and other motion or environment sensors. The motion measurements may be generated and received as time-series data, where each measurement is associated with a timestamp and a sensor channel. The data may be received by a telematics device, in-vehicle computing device, mobile device, or remote server system, or any combination thereof as described in connection with FIG. 1. The system may also preprocess the data to synchronize measurements from different modalities and address differences in sampling rates, for example by upsampling or downsampling as described elsewhere herein.

Step 704 includes generating, for each of a plurality of contiguous time windows during the drive, a crash prediction by executing a crash detection neural network on the motion measurements collected during a time period comprising the respective contiguous time window. Each contiguous time window may be a predefined length of time, such as one second. Each time period comprising a respective contiguous time window may be a predefined length of time, such as ten seconds. The start of the time period may be the same as the start of the respective time window.

The neural network may receive, as input for each interval, a multi-dimensional array, tensor, or other data structure containing synchronized sensor data for that interval and, in some embodiments, for a broader window (such as 10 contiguous intervals). The neural network may comprise convolutional layers for encoding spatial and temporal patterns within each interval, pooling layers for temporal abstraction, recurrent layers (such as GRU) for modeling dependencies across intervals, and dense layers for final classification. The prediction for each interval may be a probability or confidence score indicating whether a crash occurred during that interval.

Step 706 includes determining whether each crash prediction meets one or more predefined crash detection threshold criteria. The one or more predefined crash detection threshold criteria may include a threshold probability. The threshold criteria may include a configurable probability value, a requirement for agreement among multiple models, or other statistical or heuristic rules. If the crash prediction for a given interval meets or exceeds the threshold, the system may identify that interval as potentially corresponding to a crash event. This determination may be performed on the same device that executed the neural network, or a separate device, depending on the system architecture.

Step 708 includes generating a crash analysis using the motion measurements collected during a time period in response to determining that the crash prediction for the corresponding contiguous time window meets the one or more predefined crash detection threshold criteria. The crash analysis may be performed by invoking a more computationally intensive model, such as a transformer-based neural network, on the relevant segment of sensor data. The analysis may incorporate additional data from other sensors (e.g., gyroscope, barometer, microphone), contextual information (e.g., weather, traffic), or data from external databases. The crash analysis may determine one or more characteristics of the crash event, such as severity, impact direction, airbag deployment, and environmental context, and may generate a structured report for transmission to a remote server system, presentation to the user, or for triggering emergency response actions.

In some embodiments, steps 702-708 can be performed across multiple devices. For example, steps 702-706 may be executed on a telematics device or mobile device within the vehicle, while step 708 may be executed on a more capable device such as a mobile device, a server system, or a cloud platform. The system may transmit the relevant sensor data and/or crash prediction results between devices as needed to enable distributed or modular execution and to leverage the processing, memory, and sensor resources available on each device.

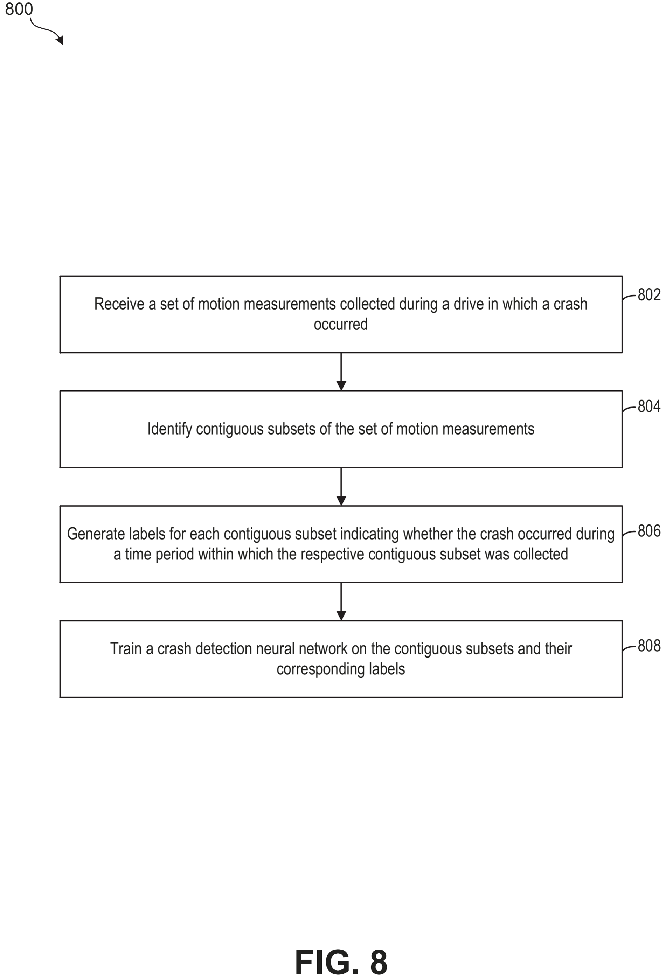

**FIG.** 8 illustrates a method 800 of training a crash detection neural network, according to some aspects of the present disclosure. Steps of method 800 may be performed in any order and/or in parallel, and one or more steps of method 800 may be optionally performed. One or more steps of method 800 may be performed by one or more processors. Method 800 may be implemented as a computer-readable medium or computer program product comprising instructions which, when the program is executed by one or more processors, cause the one or more processors to carry out the steps of method 800.

Step 802 includes receiving a set of motion measurements collected by one or more sensors disposed in a vehicle during a drive in which a crash occurred (e.g., device sensors 121). The set of motion measurements may be received with additional sets of motion measurements collected by respective sensors disposed in respective vehicles during respective drives in which respective crashes occurred. Additional sets of motion measurements may be received for drives during which a crash is known not to have occurred, but for which the motion measurements are indicative of a crash. The data may be organized as time-series data, where each measurement is associated with a timestamp, sensor channel, and, optionally, vehicle and drive identifiers.

Step 804 includes identifying contiguous subsets of the set of motion measurements, where each subset corresponds to a time window of predefined length, such as one second. The subsets may be constructed by sliding a window of the predefined length across the full time-series data for each drive, generating a sequence of overlapping or non-overlapping intervals. For each subset, data from different sensor modalities may be aligned using interpolation or aggregation as necessary to ensure temporal synchronization.

Step 806 includes generating, for each contiguous subset, a label indicating whether a crash occurred during a time period that comprises the subset. The time period associated with each label may be longer than the subset itself (for example, a ten-second window that includes the one-second subset). The label may be set to indicate a crash if a crash is known to have occurred at any point within the time period, and to indicate no crash otherwise. This labeling strategy ensures that the network is trained to recognize temporal patterns associated with crash events even when those patterns are distributed across multiple intervals.

Step 808 includes training a crash detection neural network on the contiguous subsets and their corresponding labels. For each subset, the neural network receives as input the sensor data for the relevant time window and is optimized to predict the correct label. The neural network may comprise convolutional layers for encoding spatial and temporal patterns, pooling layers for abstraction, recurrent layers (such as GRU) for modeling sequential dependencies, and dense layers for final classification. The network is trained end-to-end using a suitable loss function (e.g., binary cross-entropy) and optimization algorithm (e.g., Adam, stochastic gradient descent), with regularization or early stopping as needed.

In some embodiments, the training method may further include data augmentation, such as adding synthetic noise, applying random time shifts, or varying sensor alignments, to improve model robustness. The method may also include evaluating the trained model on a validation or test set, computing performance metrics (e.g., recall, precision, false positive rate), and tuning hyperparameters to maximize detection accuracy. The trained neural network may then be deployed to one or more devices as described above, with ongoing updates as new data becomes available.

Specific details are given in the following description to provide a thorough understanding of the embodiments. However, it will be understood by one of ordinary skill in the art that the embodiments may be practiced without these specific details. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Also, it is noted that individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Implementation of the techniques, blocks, steps, and means described above may be done in various ways. For example, these techniques, blocks, steps, and means may be implemented in hardware, software, or a combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), mask programmable gate array (MPGA), processors, controllers, micro-controllers, microprocessors, other electronic units designed to perform the functions described above, and/or combinations thereof.

Also, it is noted that the embodiments and/or examples may be described as a process which is depicted as a flowchart, a flow diagram, a swimlane diagram, a data flow diagram, a structure diagram, or a block diagram. Although a depiction may describe the operations as a sequential process, many of the operations can be performed in parallel or concurrently. In addition, one or more of the operations may be performed out-of-order from the order depicted. A process may terminate when its operations are completed or return to a previous step or block. A process could have additional steps or blocks not included in the figure. A process may correspond to a method, a function, a procedure, a subroutine, a subprogram, etc. When a process corresponds to a function, its termination corresponds to a return of the function to a calling function or a main function.

Furthermore, the devices and/or systems described herein may be implemented by hardware, software, scripting languages, firmware, middleware, microcode, hardware description languages, and/or any combination thereof. When implemented in software, firmware, middleware, scripting language, and/or microcode, the program code, or code segments to perform the necessary tasks may be stored in a non-transitory computer-readable medium such as a storage medium. A code segment or machine-executable instruction may represent a procedure, a function, a subprogram, a program, a routine, a subroutine, a module, a software package, a script, a class, or any combination of instructions, data structures, and/or program statements. A code segment may be coupled to another code segment or a hardware circuit by passing and/or receiving information, data, arguments, parameters, and/or memory contents. Information, arguments, parameters, data, etc. may be passed, forwarded, or transmitted via any suitable means including memory sharing, message passing, token passing, network transmission, etc.

For a firmware and/or software implementation, the methodologies may be implemented with modules (e.g., procedures, functions, and so on) that perform the functions described herein. Any non-transitory computer-readable medium tangibly embodying instructions may be used in implementing the methodologies described herein. For example, software codes may be stored in a memory. Memory may be implemented within the processor or external to the processor. As used herein, the term "memory" refers to any type of volatile, non-volatile, or other storage medium and is not to be limited to any particular type of memory, number of memories, or type of media upon which memory is stored.

Moreover, as disclosed herein, the term "storage" may represent one or more memories for storing data, including read only memory (ROM), random access memory (RAM), magnetic RAM, cache memory, magnetic disk storage mediums, optical storage mediums, flash memory devices, and/or other machine-readable mediums for storing information. The term "computer-readable medium" includes, but is not limited to, portable or fixed storage devices, optical storage devices, and/or various other storage mediums capable of storing that contain or carry instruction(s) and/or data.

The examples and embodiments described herein are for illustrative purposes only. Various modifications or changes in light thereof will be apparent to persons skilled in the art. These are to be included within the spirit and purview of this application, and the scope of the appended claims, which follow.

## Claims

1. A computer-implemented method of detecting a crash event, the computer-implemented method comprising:
receiving, in real-time by an application executing on a computing device disposed in a vehicle during a drive, a stream of time-series data generated by one or more motion sensors disposed in the vehicle during the drive;
generating, by the application for each contiguous interval within the stream of time-series data of a first predefined length, a crash prediction, wherein the crash prediction for a contiguous interval is indicative of whether the vehicle was involved in a crash during the contiguous interval, and generating the crash prediction for the contiguous interval comprises:
executing, by the application, a crash detection neural network on the time-series data generated by the one or more motion sensors during a time period that comprises the contiguous interval in response to receiving the time-series data generated during the time period, wherein the time period has a second predefined length that is greater than the first predefined length; and
for each crash prediction:
determining, by the application, whether the crash prediction meets one or more predefined crash detection threshold criteria; and
generating, by the application, a crash analysis using the time-series data generated during the corresponding time period in response to determining that the crash prediction meets the one or more predefined crash detection threshold criteria.

2. The computer-implemented method of claim **Error! Reference source not found.,** wherein the computing device comprises the one or more motion sensors.

3. The computer-implemented method of claim **Error! Reference source not found.,** wherein the one or more motion sensors comprise an accelerometer and the time-series data comprises accelerometer measurements generated by the accelerometer.

4. The computer-implemented method of claim **Error! Reference source not found.,** wherein the one or more motion sensors comprise a Global Navigation Satellite System (GNSS) receiver and the time-series data comprises speed measurements generated by the GNSS receiver.

5. The computer-implemented method of claim **Error! Reference source not found.,** wherein the time-series data comprises accelerometer measurements generated at a first sampling rate and speed measurements generated at a second sampling rate that is less than the first sampling rate, and the method further comprises generating, for each contiguous interval, interpolated speed measurements at the first sampling rate.

6. The computer-implemented method of claim **Error! Reference source not found.,** wherein the first predefined length is greater than an interval between successive measurements of the time-series data.

7. The computer-implemented method of claim **Error! Reference source not found.,** wherein the first predefined length of each contiguous interval is one second.

8. The computer-implemented method of claim **Error! Reference source not found.,** wherein the start time of the time period is the same as the start time of the contiguous interval.

9. The computer-implemented method of claim **Error! Reference source not found.,** wherein the start time of the time period is prior to the start time of the contiguous interval.

10. The computer-implemented method of claim **Error! Reference source not found.,** further comprising:
receiving a collection of time-series data generated by one or more motion sensors disposed in a second vehicle during a prior drive in which a crash occurred;
identifying contiguous subsets of the collection of time-series data, wherein each contiguous subset represents a same amount of time during the prior drive as the first predefined length;
generating, for each contiguous subset, a label indicating whether the crash occurred during a second time period that comprises the contiguous subset, wherein the second time period has a same length as the second predefined length; and
training the crash detection neural network on the contiguous subsets of the collection of time-series data and their corresponding labels.

11. The computer-implemented method of claim **Error! Reference source not found.,** wherein the crash detection neural network comprises:
a convolutional neural network layer trained to encode time-series data from a single contiguous interval of the first predefined length into discrete features that characterizes spatial and temporal patterns within the time-series data of the single contiguous interval; and
a gated recurrent unit layer trained to generate context-aware features for the single contiguous interval based on the discrete features from multiple successive intervals including the single contiguous interval.

12. The computer-implemented method of claim **Error! Reference source not found.,** wherein generating the crash analysis comprises:
executing, by the application, a crash analysis neural network on the time-series data generated during the corresponding time period, wherein the crash analysis neural network is different from the crash detection neural network and comprises at least one transformer model that requires additional computations per execution compared to the crash detection neural network.

13. The computer-implemented method of claim **Error! Reference source not found.,** wherein generating the crash analysis comprises:
transmitting, by the application, the time-series data generated during the corresponding time period to a remote server system.

14. A system comprising:
one or more motion sensors configured to generate a stream of time-series data while the one or more motion sensors are disposed in a vehicle during a drive; and
a computing device comprising:
one or more processors; and
a computer-readable medium comprising instructions that, when executed by the one or more processors, cause the one or more processors to:
receive, in real-time, the stream of time-series data generated by the one or more motion sensors disposed in the vehicle during the drive;
generate, for each contiguous interval within the stream of time-series data of a first predefined length, a crash prediction, wherein the crash prediction for a contiguous interval is indicative of whether the vehicle was involved in a crash during the contiguous interval, and generating the crash prediction for the contiguous interval comprises:
executing a crash detection neural network on the time-series data generated by the one or more motion sensors during a time period that comprises the contiguous interval in response to receiving the time-series data generated during the time period, wherein the time period has a second predefined length that is greater than the first predefined length; and
for each crash prediction:
determine whether the crash prediction meets one or more predefined crash detection threshold criteria; and
generate a crash analysis using the time-series data generated during the corresponding time period in response to determining that the crash prediction meets the one or more predefined crash detection threshold criteria.

15. A non-transitory computer-readable medium comprising instructions that, when executed by one or more processors of a computing device, cause the one or more processors to perform operations comprising:
receiving, in real-time while the computing device is disposed in a vehicle during a drive, a stream of time-series data generated by one or more motion sensors disposed in the vehicle during the drive;
generating, for each contiguous interval within the stream of time-series data of a first predefined length, a crash prediction, wherein the crash prediction for a contiguous interval is indicative of whether the vehicle was involved in a crash during the contiguous interval, and generating the crash prediction for the contiguous interval comprises:
executing a crash detection neural network on the time-series data generated by the one or more motion sensors during a time period that comprises the contiguous interval in response to receiving the time-series data generated during the time period, wherein the time period has a second predefined length that is greater than the first predefined length; and
for each crash prediction:
determining whether the crash prediction meets one or more predefined crash detection threshold criteria; and
generating a crash analysis using the time-series data generated during the corresponding time period in response to determining that the crash prediction meets the one or more predefined crash detection threshold criteria.
